(19) Europäisches Patentamt
European Patent Office
Office européen des brevets

(11) Publication number: **0 081 984**
**A1**

(12) # EUROPEAN PATENT APPLICATION

(21) Application number: **82306591.7**

(51) Int. Cl.³: **C 08 F 18/24**

(22) Date of filing: **10.12.82**

(30) Priority: **14.12.81 US 330426**

(43) Date of publication of application: **22.06.83**
**Bulletin 83/25**

(84) Designated Contracting States: **DE FR GB IT NL**

(71) Applicant: **PPG INDUSTRIES, INC., One Gateway Center, Pittsburgh Pennsylvania 15222 (US)**

(72) Inventor: **Holtman, Mark Steven, 970 Brookpoint Drive, Macedonia Ohio 44056 (US)**
Inventor: **Haynes, Ronald Louis, 2601 Shoreline Drive Apt. B2, Akron Ohio 44313 (US)**

(74) Representative: **Shipton, Gordon Owen et al, W.P. THOMPSON & CO. Coopers Building Church Street, Liverpool L1 3AB (GB)**

(54) **Method of reduction of discoloration of aromatic peroxide initiated polyol (allyl carbonate) polymers and polymers produced thereby.**

(57) A solid polymeric composition comprising a polymerizate of a polyol (allyl carbonate), fragments of aromatic peroxide initiator, and an effective amount of a 2-hydroxy-4-alkoxy benzophenone.

A method of polymerizing a polyol (allyl carbonate) monomer comprising:

a) forming a composition comprising polyol (allyl carbonate) monomer and aromatic peroxide initiator; and

b) initiating polymerization;

characterized in that the composition initially contains up to 0.01 mole of original aromatic peroxide initiator per equivalent of polyol (allyl carbonate) monomer and an effective amount of a 2-hydroxy-4-alkoxy benzophenone.

A method of reducing ultraviolet induced yellowing of aromatic peroxide initiated poly [polyol (allyl carbonate)] comprising:

a) maintaining the level of original aromatic peroxide initiator up to about 0.01 mole per equivalent of polyol (allyl carbonate) monomer; and

b) providing an effective amount of a 2-hydroxy-4-alkoxy benzophenone in the polyol (allyl carbonate) monomer.

A method of reducing yellowing of aromatic peroxide initiated poly [polyol (allyl carbonate) comprising:

a) maintaining the level of original aromatic peroxide initiator up to 0.01 mole per equivalent of polyol (allyl carbonate) monomer and providing an effective amount of a 2-hydroxy-4-alkoxy benzophenone;

b) polymerizing the polyol (allyl carbonate) to form a solid polymerizate; and

c) continuing the polymerization above 100 degrees Centigrade and low enough to avoid thermal degradation induced yellowness.

EP 0 081 984 A1

# DESCRIPTION

## METHOD OF REDUCTION OF DISCOLORATION OF AROMATIC PEROXIDE INITIATED POLYOL (ALLYL CARBONATE) POLYMERS AND POLYMERS PRODUCED THEREBY.

The present invention relates to a method of reduction of discoloration of aromatic peroxide initiated polyol (allyl carbonate) polymers and polymers produced thereby.

Aromatic peroxide initiated polyol (allyl carbonate) polymers have superior physical properties, e.g., impact strength, relative to dialkyl peroxy dicarbonate initiated polyol (allyl carbonate) polymers. Moreover, the commerically available aromatic peroxides generally have a higher initiation temperature, i.e. a longer half-life, than dialkyl peroxy dicarbonate initiators, thereby being more convenient to ship or store. However, aromatic peroxide initiators are reported to impart a yellow discoloration to the polymerizate. Moreover, aromatic peroxide initiated polyol (allyl carbonate) polymerizates are reported to be more susceptible to ultraviolet radiation induced yellowing than are dialkyl peroxy dicarbonate initiated polyol (allyl carbonate) polymers.

According to the invention herein contemplated the yellow coloration of the polyol (allyl carbonate) polymerizate, including both initial discoloration and ultraviolet induced yellowing, is reduced by the use of low levels of the initiator, the presence of a 2-hydroxy-4-alkoxy benzophenone ultraviolet absorber, and preferably the destruction of the initiator.

In one exemplification of the invention herein contemplated, there is provided a solid, polymeric composition of a polyol (allyl carbonate), fragments

BAD ORIGINAL

of aromatic peroxide initiator, and an effective amount of a 2-hydroxy-4-alkoxy benzophenone.

By "fragments of aromatic peroxide initiator" is meant the reacted initiator present in the termination product of growing polymer, i.e. the coupling reaction product or the disproportionation reaction product of two active centers. By "an effective amount of a 2-hydroxy-4-alkoxy benzophenone" is meant an amount sufficient to reduce yellowing and discoloration, e.g., ultraviolet radiation induced yellowing and discoloration, below the levels thereof encountered in the polymerizate in the absence of 2-hydroxy-4-alkoxy benzophenone.

In one embodiment of the invention there is provided a liquid composition of monomeric polyol (allyl carbonate), and aromatic peroxide initiator, where the initial concentration of aromatic peroxide initiator is sufficient to provide a solid polymerizate and up to about 0.01 mole of aromatic peroxide initiator per equivalent of allyl carbonate group, and in a preferred exemplification, the monomeric composition further includes an effective amount of 2-hydroxy-4-alkoxy benzophenone. The composition is polymerized to yield a solid polymerizate. According to a preferred exemplification, the solid polymerizate is further cured for a time sufficient under kinetic considerations to substantially destroy the residual, unreacted aromatic peroxide initiator. That is, after polymerization the solid polymerizate is heated for a time and temperature theoretically sufficient, assuming first order homolytic decomposition in the polymerizing system with the same coefficient as in a monomer system, to incorporate from about 83 percent to about 99.99 percent or more of the residual, unreacted aromatic polymerization initiator in the polymer, e.g., by initiation, chain growth, and chain termination.

Most commonly the aromatic peroxide initiators herein contemplated have the empirical formula

represented by

$$X - \emptyset - \overset{O}{\overset{\|}{C}} - O - O - \overset{O}{\overset{\|}{C}} - \emptyset - X$$

where X is chosen from the group consisting of hydrogen, $C_1$ to $C_{12}$ alkoxy groups, chlorine, and bromine. Most commonly X is hydrogen, a $C_1$ to $C_4$ alkoxy group, or bromine. Exemplary aromatic peroxide initiators include benzoyl peroxide, bis(p-methoxy benzoyl) peroxide, bis(p-ethoxy benzoyl) peroxide, bis(p-propoxy benzoyl) peroxide, bis (p-isopropoxy benzoyl) peroxide, bis(p-butoxy benzoyl) peroxide, and bis (p-chloro benzoyl) peroxide. Especially preferred is benzoyl peroxide.

In order to reduce initial discoloration and ultraviolet induced yellowing, the amount of aromatic peroxide initiator should be the minimum that will provide the desired cure as evidenced by, e.g., Barcol hardness or Izod Impact Strength.

The minimum amount of aromatic peroxide initiator needed to provide the described degree of cure may be found by routine experimentation. For example, in order to impart a fifteen second Barcol hardness above about 20 to diethylene glycol bis(allyl carbonate), from about 0.05 mole to about 0.01 mole of benzoyl peroxide is required per equivalent of allyl carbonate functionality. Amounts above about 0.01 mole of initiator per mole of allyl carbonate functionality provide either excessive amounts of unreacted peroxide in the polymerizate without significantly enhancing the physical properties of the resulting polymerizate or excessive amounts of initial yellow discoloration. Moreover, it has been found that Barcol hardness values as high as about 25 may be obtained without undesirable initial yellow discoloration, at the initiator concentrations contemplated herein, by the extended cure contemplated herein. Generally, for aromatic peroxide polymerization initiators having a half life of 0.1 to 1.0 hour at 100°C, the concentration thereof should be about 0.005 mole per equivalent of allyl carbonate to about 0.01 mole per equivalent of allyl carbonate.

The tendency of the aromatic peroxide to introduce yellowing or discoloration into the polymerizate may be further reduced without deterioration of the polymerizate hardness by

continuing the cure, i.e., heating, beyond that previously thought necessary to attain the desired degrees of hardness. For example, when the cure cycle shown in Table I below is followed, the polymerizate may be maintained at 100 degrees for an additional 1 to 4 hours or more. The post cure is generally carried out above about 100 degrees C, but below the temperatures at which thermal degradation provides undesirable yellowness, e.g., 125 degrees Centigrade, and preferably for a time sufficient to attain either substantially constant or maximum Barcol hardness. Although not wishing to be bound thereby, the additional 1 to 4 hours of post cure is believed to decompose, e.g., by initiation and chain termination, from 83 percent to 99.9 percent of the aromatic peroxide initiator remaining unreacted at the end of the normal 18 hour cure cycle. Moreover, the additional 1 to 4 hours of cure increases the Barcol Hardness by about 5 to 8 units, while avoiding the undesirable amounts of yellowness associated with the higher peroxide initiator concentrations previously believed to be required therefor.

TABLE I

Time-Temperature Sequence For Benzoyl Peroxide Cure

| Cumulative Hours | Temperature, °C |
|---|---|
| 2 | 63 |
| 4 | 65 |
| 6 | 67 |
| 8 | 77 |
| 10 | 80 |
| 12 | 85 |
| 14 | 88 |
| 16 | 92 |
| 18 | 100 |

While the invention is illustrated with respect to benzoyl peroxides, it is to be understood that the methods described herein may be used with other aromatic peroxides, for example dicumyl peroxides.

Contemplated herein in a preferred exemplificaiton is the presence of a 2-hydroxy-4-alkoxy benzophenone ultraviolet absorber

having high absorbence in the range of 250 nanometers to 450 nanometers. The amount of 2-hydroxy-4-alkoxy benzophenone ultraviolet energy absorber is an amount sufficient to reduce the ultraviolet radiation induced yellowing of the polyol (allyl carbonate) polymerizate, but low enough to avoid imparting a color thereto. Generally the amount of 2-hydroxy-4-alkoxy benzophenone is from about 0.005 moles of the benzophenone to about 0.15 moles of the benzophenone per peroxy bond in the organic peroxide initiator. Higher amounts of benzophenone may impart coloration to the polymerizate, while lower amounts, i.e., less than about 0.01 moles of benzophenone per peroxy bond, do not appear to reduce ultraviolet radiation induced yellowing.

An especially preferred range of 2-hydroxy-4-alkoxy benzophenone, for example 2-hydroxy-4-methoxy benzophenone, with an aromatic peroxide initiator, for example benzoyl peroxide, in a polyol (allyl carbonate), for example diethylene glycol bis (allyl carbonate), is from about 0.01 mole of 2-hydroxy-4-methoxy benzophenone per mole of benzoyl peroxide to about 0.15 mole of 2-hydroxy-4-methoxybenzophenone per mole of benzoyl peroxide, with a range of about 0.02 to 0.08 moles of 2-hydroxy-4-methoxy benzophenone per mole of benzoyl peroxide being especially preferred.

The 2-hydroxy-4-alkoxy benzophenones herein contemplated have the empirical formula represented by

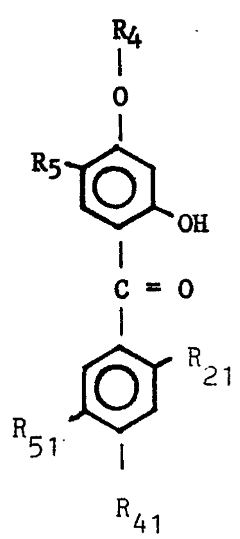

where $R_4$ is chosen from the group consisting of $C_1$ to $C_{12}$ alkyls and $C_2$ to $C_{12}$ hydroxy alkyls, $R_5$ is chosen from the group consisting of -H and $-CH_3$, $R_{21}$ is chosen from the group consisting of -H and -OH, $R_{41}$ is chosen from the group consisting of -H, $C_1$ to $C_{12}$ alkoxy groups, and $C_2$ to $C_{12}$ alkoxy hydroxide groups, and $R_{51}$ is chosen from the group consisting of -H and $-CH_3$.

In commercially available 2-hydroxy-4-alkoxy benzophenones, $R_4$ is commonly $-CH_3$, $-C_4H_9$, $C_7H_{15}$, $C_8H_{17}$, $C_{12}H_{25}$, or $C_2H_4OH$, $R_5$ is -H, $R_{21}$ is -H, $R_{41}$ is -H, and $R_{51}$ is -H. Exemplary are 2-hydroxy-4-methoxy benzophenone sold under the names American Cyanamid Company CYASORB® "UV-9", and GAF UVINUL® "M-40", 2-hydroxy-4-heptyloxy benzophenone, sold under the name "UNITSAT 247" by Ward, Blenkinsop & Co., Ltd., 2-hydroxy-4-octyloxy benzophenone sold under the names American Cyanamid Co. CYASORB® "UV-531" and Pennsylvania Industrial Chemical Co. PICCO™ "UV-299", 2-hydroxy-4-dodecyloxy benzophenone sold under the name Eastman Inhibitor DOBP, and DuPont RYLEX™ "D", and 2-hydroxy-4-(2-hydroxy ethoxy) benzophenone sold under the name Eastman Inhibitor HHBP.

Other commercial 2-hydroxy-4-alkoxy benzophenones are 2-hydroxy-4-methoxy-5-methylbenzophenone, 2,2'-dihydroxy-4-methoxy benzophenone, 2,2'-dihydroxy-4-butoxy benzophenone, 2,2'-dihydroxy-4-octyloxy benzophenone, and 2,2'-dihydroxy-4,4'dimethoxy benzophenone.

In a particularly preferred exemplification the 2-hydroxy-4-alkoxy benzophenone has the empirical formula represented by

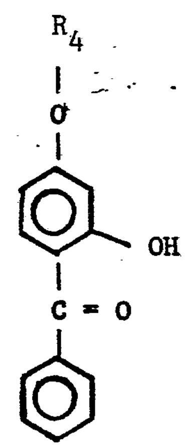

where $R_4$ is a $C_1$ to $C_{12}$ alkyl or a $C_2$ to $C_{12}$ alkyl hydroxy.

Examples of polyol (allyl carbonates) which may be polymerised in accordance with this invention are mono-functional allyl carbonates, diol bis(allyl carbonates), triol tris(allyl carbonates), tetra kis(allyl carbonates), and higher polyol(allyl carbonates).

Diol bis (allyl carbonate) monomers which may be polymerized by the method of this invention are normally liquid allyl carbonates, and, most commonly, are aliphatic diol bis (allyl carbonates) i.e., glycol bis (allyl carbonate) compounds, in which the allyl groups may be substituted at the 2 position with a halogen, notably chlorine or bromine, or a 1 to 4 carbon alkyl group, generally a methyl or ethyl group, and the glycol group may be an alkylene, alkylene ether, alkylene polyether, alkylene carbonate, or alkylene polyether group having from 2 to 10 carbons and oxygens. These diol bis (allyl carbonate) monomers are represented by the formula:

$$R_7 - O - \overset{O}{\overset{\|}{C}} - O - R_8 - O - \overset{O}{\overset{\|}{C}} - O - R_9$$

where $R_7$ and $R_9$ are allyl or substituted allyl groups, and $R_8$ is as defined below. $R_7$ and $R_9$ are independently represented by the formula:

$$H_2C = \overset{R^{10}}{\overset{|}{C}} - CH_2-$$

where $R^{10}$ may be hydrogen, halogen, or a 1 to 4 carbon alkyl group. Specific examples of $R_7$ and $R_9$ are allyl, 2-chloroallyl 2-bromoallyl, 2-iodoallyl, 2-fluoroallyl, 2-methallyl, 2-ethylallyl, 2-isopropylallyl, 2-n-propylallyl, and 2-n-butylallyl groups. Most commonly, $R_7$ and $R_9$ are allyl groups, $H_2C = CH - CH_2-$. Such compounds and methods for making them are disclosed in U. S. Patents 2,370,567 and 2,403,113.

Specific examples of $R_8$ are alkylene groups e.g. ethylene, trimethylene, methylethylene, tetramethylene, ethylethylene, pentamethylene, hexamethylene, 2-methylhexamethylene,

octamethylene, and decamethylene groups, alkylene ether groups e.g., $-CH_2-O-CH_2-$, $-CH_2CH_2-O-CH_2CH_2-$, $-CH_2-O-CH_2-CH_2-$, and $-CH_2CH_2CH_2-O-CH_2CH_2CH_2-$, alkylene polyether groups e.g., $-CH_2CH_2-O-CH_2CH_2-O-CH_2CH_2-O-CH_2CH_2O-CH_2CH_2-$, and $-CH_2-O-CH_2-$ groups, alkylene carbonate groups e.g., $CH_2CH_2-O-CO-O-CH_2CH_2$ and alkylene carbonate groups e.g., $-CH_2CH_2-O-CH_2CH_2-O-CO-O-CH_2CH_2-OCH_2CH_2-$ groups.

Specific examples of diol bis (allyl carbonate) monomers useful in carrying out the method herein contemplated are ethylene glycol bis (2-chloroallyl carbonate), diethylene glycol bis (2-methallyl carbonate), triethylene glycol bis (allyl carbonate), propylene glycol bis (2-ethylallyl carbonate), 1,3-propanediol bis (allyl carbonate), 1,3-butanediol bis (allyl carbonate), 1,4-butanediol bis (2-bromoallyl carbonate), dipropylene glycol bis (allyl carbonate), trimethylene glycol bis (2-ethylallyl carbonate), and pentamethylene glycol bis (allyl carbonate).

Commercially important diol bis (allyl carbonate) monomers which may be polymerized by the method herein contemplated are:

$$CH_2 = CH-CH_2-O-\overset{O}{\overset{\|}{C}}-O-CH_2-CH_2-O-CH_2CH_2-O-CH_2-CH_2-O-\overset{O}{\overset{\|}{C}}-O-CH_2CH = CH_2,$$

$$CH_2 = CH-CH_2-O-\overset{O}{\overset{\|}{C}}-O-CH_2CH_2-O-CH_2CH_2-O-\overset{O}{\overset{\|}{C}}-OCH_2-CH = CH_2, \text{ and}$$

$$CH_2 = CH-CH_2-O-\overset{O}{\overset{\|}{C}}-O-CH_2CH_2-O-\overset{O}{\overset{\|}{C}}-O-CH_2-CH = CH_2.$$

Triol tris(allyl carbonates) which may be polymerized by the method of this invention, either homopolymerized or copolymerized, e.g., with diol bis(allyl carbonates), are represented by the formula

$$R_{11}-(O\overset{O}{\overset{\|}{C}}O-CH_2CH=CH_2)_n$$

with n equal to 3 where $R_{11}$ is an organic moiety chosen from the group consisting of moieties derived from polyols and extended polyols, most frequently a triol or extended triol where the hydroxyl groups of the precursor polyol $R_{11}(OH)_n$ are non-vicinal.

While the functionality indicated above is tris functionality, it is to be understood that in higher polyols n is greater than 2, e.g., above about 2.2, representing a mixture of diols and higher polyols, to about 8 representing a derivative of trimeric pentaerythritol. By "non-vicinal" it is meant that the hydroxyl groups are not on adjacent carbons. Specific triol precursors useful in preparing the tris(allyl carbonate) materials useful in this invention are triols with primary or secondary hydroxyl groups. Triols having primary hydroxyl groups are preferred precursors. One such class of triols are 1,1,1-trimethylol alkanes. Also useful are extended trimethylol alkyl tris(allyl carbonate) monomers e.g., , lactone extended trimethylol alkanes and alkyl oxide extended trimethylol alkanes. By an "extended triol" is meant the reaction product having terminal hydroxyl groups of the triol and a suitable reactant, e.g., an alkyl oxide or a lactone. Typical lactone extended trimethylol alkanes are -caprolactone extended trimethylol methane, -caprolactone extended trimethylol ethane, -caprolactone extended trimethylol propane, and -caprolactone extended trimethylol butane. Typical alkyl oxide extended triols are ethylene oxide extended trimethylol methane, ethylene oxide extended trimethylol ethane, ethylene oxide extended trimethylol propane, ethylene oxide extended trimethylol butane, propylene oxide extended trimethylol methane, propylene oxide extended trimethylol methane, propylene oxide extended trimethylol ethane, propylene oxide extended trimethylol butane.

The preferred polyols meeting these requirements have the general formula $R_{11}(OH)_n$ where n is greater than 2 up to about 8 and generally is about 3. $R_{11}$ can be

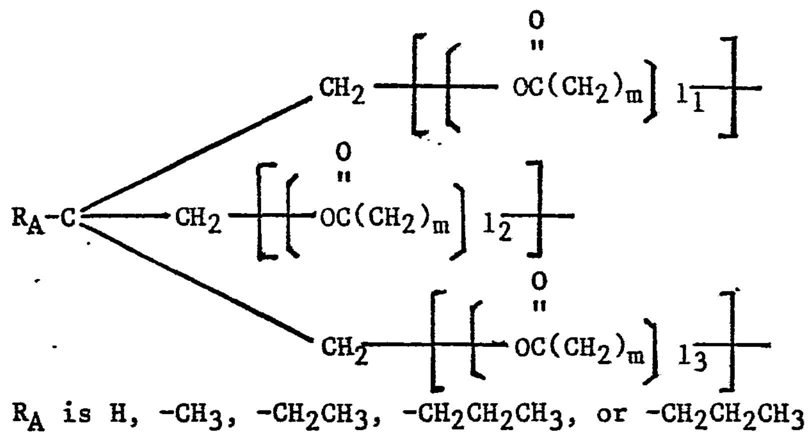

where $R_A$ is H, $-CH_3$, $-CH_2CH_3$, $-CH_2CH_2CH_3$, or $-CH_2CH_2CH_3$, and $l_1$, $l_2$ and $l_3$ are each integers from 0 to 5 and the sum of $l_1 + l_2 + l_3$ is 2 or more and generally from 2 to 8, although values as high as 15 are possible. The value of m depends on the lactone utilized to extend the polyol and is generally, 4 or 5.

The chain extending lactone may be for example a delta lactone having the formula

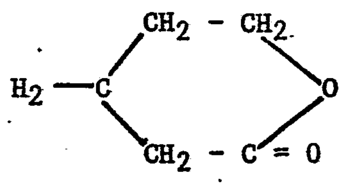

which can be substituted with hydrogen, methyl groups, or ethyl groups.

According to a still further exemplification, the chain extending lactone group can be an epsilon lactone having the formula:

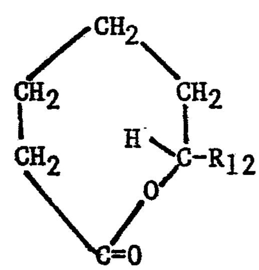

where $R_{12}$ is hydrogen, a methyl group, or an ethyl group and where $R_{12}$ can be on any of the carbons other than the carbonyl carbon. One exemplary triol is Union Carbide Corporation NIAX® PCP-0301 brand epsilon-caprolactone extended trimethylol propane.

According to a still further exemplification, $R_{11}$ can be

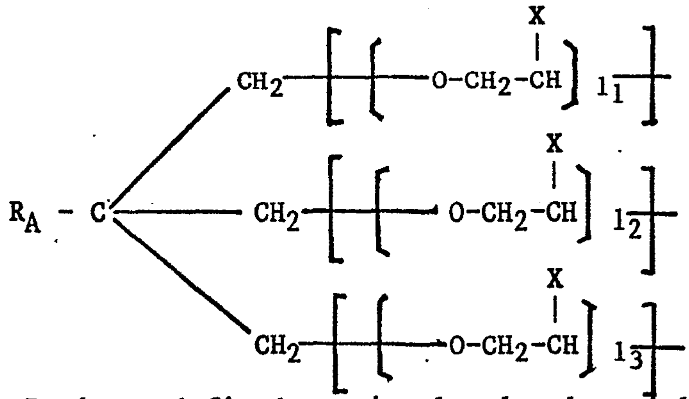

where $R_A$ is as defined previously, $l_1$, $l_2$ and $l_3$ are integers from 0 to 5 and the sum of $l_1 + l_2 + l_3$ is 2 or more and generally from about 2 to 8, although values as high as about 15 are possible, and X is H or $CH_3$. The chain extenders may be ethylene oxide groups as exemplified by Upjon ISONOL® 93 ethylene oxide extended trimethylol propane. Alternatively, the extenders may be propylene oxide groups as in BASF-Wyandotte PLURACOL TP brand propoxylated trimethylol propane.

According to a still further exemplification, $R_{11}(OH)_3$ may be an extended glycerol, for example, ethylene oxide extended glycerol having the general formula:

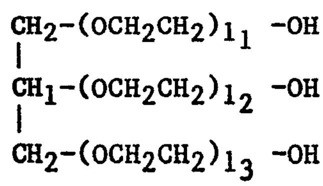

or propylene oxide extended glycerol having the formula:

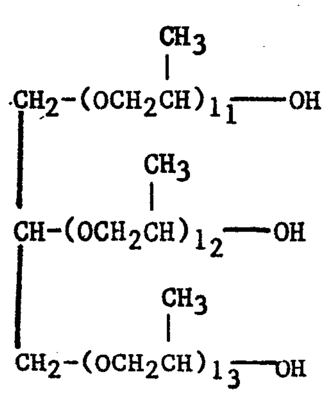

or a lactone extended glycerol having the formula:

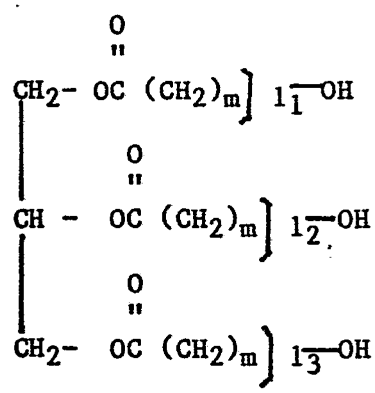

where m and $l_1$, $l_2$, and $l_3$ are as defined above. Typical propoxylated glycerines are DOW VORANOL 2025 brand propoxylated glycerine having a molecular weight of about 260 grams per gram mole, DOW VORANOL 2070 brand propoxylated glycerine having a molecular weight of about 700 grams per gram mole, and BASF-Wyandotte PLURACOL GP730 brand propoxylated glycerine having a molecular weight of about 730 grams per gram mole.

The following example is illustrative:

EXAMPLE

A series of tests were conducted to determine the effect of 2-hydroxy-4-methoxy benzophenone on the ultraviolet induced yellowing of benzoyl peroxide initiated poly[diethylene glycol bis(allyl carbonate)].

For each test a liquid composition was prepared containing the amount of American Cyanamid CYASORB® "UV-9"(TM) 2-hydroxy-4-methoxybenzophenone shown in Table II, below, 1.5 weight percent benzoyl peroxide, balance PPG Industries, Inc. CR-39® diethylene glycol bis(allyl carbonate). The composition was divided into six portions, and each portion was poured into a mold formed of two flat glass plates separated by a one-eighth inch (3 millimeter) polyvinyl chloride gasket. The samples were cured according to the following time-temperature schedule:

TABLE II

Time-Temperature Sequence For Benzoyl Peroxide Cure

| Cumulative Hours | Temperature, °C |
|---|---|
| 2 | 63 |
| 4 | 65 |
| 6 | 67 |
| 8 | 77 |
| 10 | 80 |
| 12 | 85 |
| 14 | 88 |
| 16 | 92 |
| 18 | 100 |

The samples were then subjected to 250 to 450 nanometer ultraviolet radiation from a FADE-OMETER carbon arc for 500 hours. After each interval of 100 hours exposure, the samples were tested for percent yellowness in accordance with A.S.T.M. Standard ASTM/ ANSI D-1925-70 (Reapproved 1977). The results shown in Table III, below, were obtained.

TABLE III

AVERAGE PERCENT YELLOWNESS AS A FUNCTION OF 2-HYDROXY-4-METHOXYBENZOPHENONE LEVEL AND ULTRAVIOLET EXPOSURE

| | HOURS OF ULTRAVIOLET EXPOSURE | | | | | |
|---|---|---|---|---|---|---|
| Weight Percent, 2-hydroxy-4-methoxy benzophenone | 0 | 100 | 200 | 300 | 400 | 500 |
| 0 | 2.3 | 5.1 | 6.1 | 6.8 | 7.0 | 6.3 |
| 0.01 | 3.6 | 3.6 | 4.1 | 4.3 | 4.5 | 5.1 |
| 0.05 | 2.7 | 2.9 | 3.3 | 3.3 | 3.4 | 3.7 |
| 0.10 | 3.1 | 4.5 | 5.2 | 5.5 | 5.8 | 5.5 |

While the invention has been described with respect to certain preferred exemplifications and embodiments thereof, it is not intended that the scope of the invention be defined thereby, but only by the claims appended hereto.

..................................................

CLAIMS

1. A solid polymeric composition comprising a polymerizate of a polyol (allyl carbonate), fragments of aromatic peroxide initiator, and an effective amount of a 2-hydroxy-4-alkoxy benzophenone.

2. A composition according to claim 1, wherein the polymeric composition contains from about $0.1 \times 10^{-1}$ to about $1.5 \times 10^{-1}$ mole of 2-hydroxy-4-alkoxy benzophenone per mole of original aromatic peroxide initiator.

3. A composition according to claim 1 or 2, wherein the 2-hydroxy-4-alkoxy benzophenone has the empirical formula

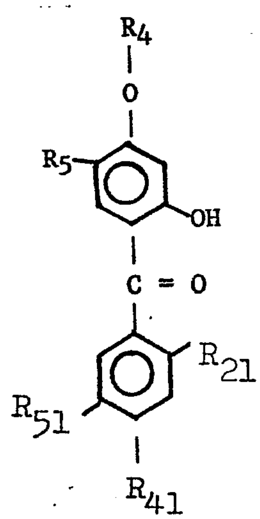

wherein $R_4$ is chosen from the group consisting of $C_1$ to $C_{12}$ alkyls and $C_2$ to $C_{12}$ hydroxy alkyls, $R_5$ is chosen from the group consisting of -H and $-CH_3$, $R_{21}$ is chosen from the group consisting of -H and -OH, $R_{41}$ is chosen from the group consisting of -H, $C_1$ to $C_{12}$ alkoxy groups, and $C_2$ to $C_{12}$ alkoxy hydroxide groups, and $R_{51}$ is chosen from the group consisting of -H and $-CH_3$.

4. A composition according to claim 3, wherein the 2-hydroxy-4-alkoxy benzophenone has the formula

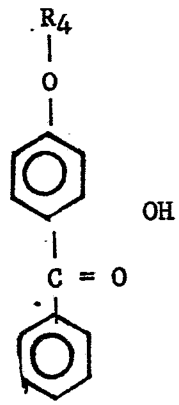

wherein $R_4$ is a $C_1$ to $C_{12}$ alkyl.

5. A composition according to any of claims 1 to 4, wherein the polyol (allyl carbonate) is a diol bis (allyl carbonate) having the formula

$$R_7 - O - \overset{O}{\overset{\|}{C}} - O - R_8 - O - \overset{O}{\overset{\|}{C}} - O - R_9$$

wherein $R_7$ and $R_9$ are chosen from the group consisting of allyl groups and substituted allyl groups, and $R_8$ is chosen from the group consisting of alkylene groups, alkylene ether groups, alkylene polyether groups, alkylene carbonate groups, and alkylene polycarbonate groups.

6. A composition according to any of claims 1 to 5, wherein the aromatic peroxide initiator is chosen from the group consisting of benzoyl peroxide, substituted benzyol peroxides, and dicymyl peroxide.

7. A method of polymerizing a polyol (allyl carbonate) monomer comprising:

a) forming a composition comprising polyol (allyl carbonate) monomer and aromatic peroxide initiator; and

b) initiating polymerization;

characterized in that the composition initially contains up to 0.01 mole of original aromatic peroxide initiator per equivalent of polyol (allyl carbonate) monomer and an effective amount of a 2-hydroxy-4-alkoxy benzophenone.

8. A method according to claim 7, characterized in that the polymerization is continued until a substantially constant or maximum Barcol hardness is obtained.

9. A method according to claim 7 or 8, characterized in that the polymeric composition contains from about $0.1 \times 10^{-1}$ to about $1.5 \times 10^{-1}$ mole of 2-hydroxy-4-alkoxy benzophenone per mole of original aromatic peroxide initiator.

10. A method according to claim 7, 8 or 9, characterized in that the 2-hydroxy-4-alkoxy benzophenone has the empirical formula

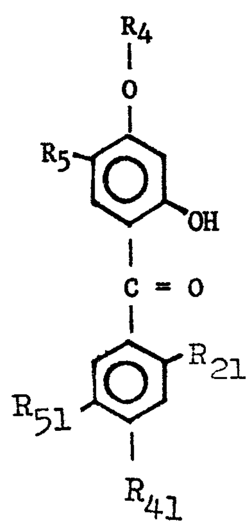

wherein $R_4$ is chosen from the group consisting of $C_1$ to $C_{12}$ alkyls and $C_2$ to $C_{12}$ hydroxy alkyls, $R_5$ is chosen from the group consisting of -H and $-CH_3$, $R_{21}$ is chosen from the group consisting of -H and -OH, $R_{41}$ is chosen from the group consisting of -H, $C_1$ to $C_{12}$ alkoxy groups, and $C_2$ to $C_{12}$ alkoxy hydroxide groups, and $R_{51}$ is chosen from the group consisting of -H and $-CH_3$.

11. A method according to claim 10, characterized in that the 2-hydroxy-4-alkoxy benzophenone has the formula

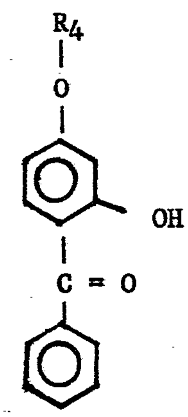

where $R_4$ is a $C_1$ to $C_{12}$ alkyl.

12. A method according to any of claims 7 to 11, characterized in that the polyol (allyl carbonate) is a diol bis (allyl carbonate) having the formula

$$R_7 - O - \overset{O}{\overset{\|}{C}} - O - R_8 - O - \overset{O}{\overset{\|}{C}} - O - R_9$$

wherein $R_7$ and $R_9$ are chosen from the group consisting of allyl groups and substituted allyl groups, and $R_8$ is chosen from the group consisting of alkylene groups, alkylene ether groups, alkylene polyether groups, alkylene carbonate groups, and alkylene polycarbonate groups.

13. A method according to any of claims 7 to 12, characterized in that the aromatic peroxide initiator is chosen from the group consisting of benzoyl peroxide, substituted benzoyl peroxides, and dicumyl peroxide.

14. A method of reducing ultraviolet induced yellowing of aromatic peroxide initiated poly [polyol(allyl carbonate)] comprising:

a) maintaining the level of original aromatic peroxide initiator up to about 0.01 mole per equivalent of polyol (allyl carbonate) monomer; and

b) providing an effective amount of a 2-hydroxy-4-alkoxy benzophenone in the polyol (allyl carbonate) monomer.

15. A method according to claim 14, wherein the polymeric composition contains from about $0.1 \times 10^{-1}$ to about $1.5 \times 10^{-1}$ mole of 2-hydroxy-4-alkoxy benzophenone per mole of original aromatic peroxide initiator.

16. A method according to claim 14 or 15, wherein the 2-hydroxy-4-alkoxy benzophenone has the empirical formula

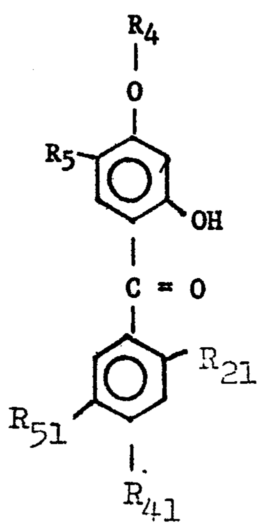

17. A method according to claim 16, wherein the 2-hydroxy-4-alkoxy benzophenone has the formula

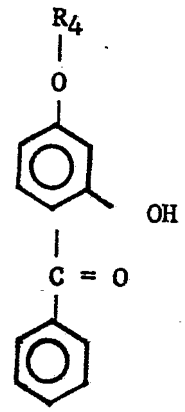

where $R_4$ is a $C_1$ to $C_{12}$ alkyl.

18. A method according to any of claims 14 to 16, wherein the polyol (allyl carbonate) is a diol bis (allyl carbonate) having the formula

$$R_7 - O - \overset{O}{\overset{\|}{C}} - O - R_8 - O - \overset{O}{\overset{\|}{C}} - O - R_9$$

wherein $R_7$ and $R_9$ are chosen from the group consisting of allyl groups and substituted allyl groups, and $R_8$ is chosen from the group consisting of alkylene groups, alkylene ether groups, alkylene polyether groups, alkylene carbonate groups and alkylene polycarbonate groups.

19. A method according to any of claims 14 to 18, wherein the aromatic peroxide initiator is chosen from the group consisting of benzyol peroxide, substituted benzyol peroxides, and dicumyl peroxide.

20. A method of reducing yellowing of aromatic peroxide initiated poly[polyol(allyl carbonate)] comprising:

a) maintaining the level of original aromatic peroxide initiator up to about 0.01 mole per equivalent of polyol (allyl carbonate) monomer and providing an effective amount of a 2-hydroxy-4-alkoxy benzophenone;

b) polymerizing the polyol (allyl carbonate) to form a solid polymerizate; and

c) continuing the polymerization above 100 degrees Centigrade and low enough to avoid thermal degradation induced yellowness.

21. A method according to claim 20, wherein the polymerization is continued for a time sufficient to obtain a substantially constant or maximum Barcol hardness.

22. A method according to claim 20 or 21, wherein the aromatic peroxide initiator is chosen from the group consisting of benzoyl peroxide, substituted benzoyl peroxide, and dicumyl peroxide.

23. A method according to claim 20, 21 or 22, wherein the polyol (allyl carbonate) is a diol bis (allyl carbonate) having the formula

$$R_7-O-\overset{O}{\overset{\|}{C}}-O-R_8-O-\overset{O}{\overset{\|}{C}}-O-R_9$$

where $R_7$ and $R_9$ are chosen from the group consisting of allyl groups and substituted allyl groups, and $R_8$ is chosen from the group consisting of alkylene groups, alkylene ether groups, alkylene polyether groups, alkylene carbonate groups, and alkylene polycarbonate groups.

24. A method according to any of claims 20 to 23, wherein the monomer contains from about $0.1 \times 10^{-1}$ to about $1.5 \times 10^{-1}$ mole of 2-hydroxy-4-alkoxy benzophenone per mole of original aromatic peroxide initiator.

25. A method according to any of claims 20 to 24, wherein the 2-hydroxy-4-alkoxy benzophenone has the empirical formula:

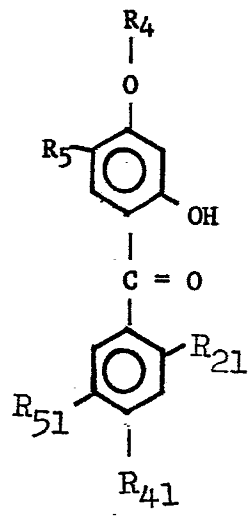

wherein $R_4$ is chosen from the group consisting of $C_1$ to $C_{12}$ alkyls and $C_2$ to $C_{12}$ hydroxy alkyls, $R_5$ is chosen from the group consisting of -H and $-CH_3$ $R_{21}$ is chosen from the group consisting of -H and -OH, $R_{41}$ is chosen from the group consisting of -H, $C_1$ to $C_{12}$ alkoxy groups, and $C_2$ to $C_{12}$ alkoxy hydroxide groups, and $R_{51}$ is chosen from the group consisting of -H and $-CH_3$.

26. A method according to claim 25, wherein the 2-hydroxy-4-alkoxy benzophenone has the formula:

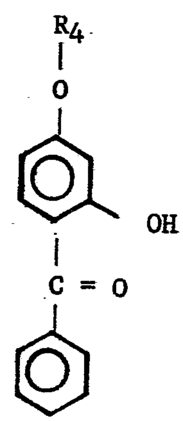

where $R_4$ is a $C_1$ to $C_{12}$ alkyl.

European Patent Office

0081984

Application number

# EUROPEAN SEARCH REPORT

EP 82 30 6591

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-1 541 889 (VEB CARL ZEISS JENA)<br>*Claims 1,2*<br>----- | 1-26 | C 08 F 18/24 |
| | | | TECHNICAL FIELDS SEARCHED (Int. Cl. 3) |
| | | | C 08 F |

The present search report has been drawn up for all claims

| Place of search | Date of completion of the search | Examiner |
|---|---|---|
| THE HAGUE | 23-03-1983 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document